(19) Europäisches Patentamt

European Patent Office

Office européen des brevets

(11) **EP 0 849 677 B1**

(12) **EUROPEAN PATENT SPECIFICATION**

(45) Date of publication and mention
of the grant of the patent:
**19.03.2003 Bulletin 2003/12**

(51) Int Cl.[7]: **G06F 11/14**, G06F 5/06

(21) Application number: **97480053.4**

(22) Date of filing: **19.08.1997**

(54) **A method and apparatus for fast and robust data collection**

Verfahren und Vorrichtung zur schnellen und sicheren Datensammlung

Méthode et appareil pour collecte de données rapide et robuste

(84) Designated Contracting States:
**DE FR GB**

(30) Priority: **20.12.1996 EP 96480128**

(43) Date of publication of application:
**24.06.1998 Bulletin 1998/26**

(73) Proprietor: **International Business Machines
Corporation
Armonk, N.Y. 10504 (US)**

(72) Inventor: **Boeuf, Patrick
06610 La Gaude (FR)**

(74) Representative: **Etorre, Yves Nicolas
Compagnie IBM France,
Département Propriété Intellectuelle
06610 La Gaude (FR)**

(56) References cited:
- **"MULTI-ACCESS FIRST-IN-FIRST-OUT QUEUE
USING 370 COMPARE AND SWAP" IBM
TECHNICAL DISCLOSURE BULLETIN,US,IBM
CORP. NEW YORK, vol. 36, no. 2, page 327-330
XP000354355 ISSN: 0018-8689**
- **"QUEUEING MECHANISM FOR BI-PROCESSOR
COMMUNICATION" IBM TECHNICAL
DISCLOSURE BULLETIN,US,IBM CORP. NEW
YORK, vol. 40, no. 5, page 169-171 XP000723604
ISSN: 0018-8689**
- **"METHOD FOR MINIMIZING THE INFORMATION
DIFFERENCE BETWEEN ACTIVE AND
LOG-BASED RECOVERY IN TRANSACTION
SYSTEMS USING INCREMENTAL INSTEAD OF
PERIODIC CHECKPOINTING" IBM TECHNICAL
DISCLOSURE BULLETIN,US,IBM CORP. NEW
YORK, vol. 30, no. 3, page 1340-1346
XP000714450 ISSN: 0018-8689**

**Description**

FIELD OF THE INVENTION

The invention relates to a method for writing a variable length data stream as a record of storage units to a logging file.

BACKGROUND OF THE INVENTION

Log file server application are requested in a distributed environment for logging in a network information sent simultaneously from network addresses. Any kind of network information can be stored such as information for network management or client accounting data, both being vital data. This first constraint implies the necessity of a reliable log server application in the network. When the server is unintentionaly stopped, a minimum amount of data should be lost and the damaged data should be identified when the server is restarted.

On one other hand, the amount of data increases with the size of the network. In modern networks, such as those allowing high speed inter-site communications, a large amount of data is simultaneously sent from many network addresses has to be stored on the server. This second constraint implies the necessity of a logging application. The performance of the logging application is poor, when a concurrent write operation occurs between two network clients. If the performance is sufficient an optional reliable protocol can be used between the application and one client for advising that no more data has to be sent. This reduces the amount of data lost.

With the decreasing cost of disk storage, the solution used nowadays is based on a multifile file server. A new file is opened when a buffer full condition occurs of the first file of the server. This solution of the prior art is described in the public Internet-draft document disclosing a Connection-Oriented Accounting Mib 'draft-ietf-atommib-acct-03.txt' of Keith McCloghrie, Juha Heinanen, Wedge Green and Anil Prasad, dated July 31, 1996. In this document, the file of collected accounting data sent by the SNMP agents of a TCP/IP network has a given maximum size and when the file reaches that size, either the agent automatically swaps to a new version of the file, or new records are discarded. This document encourages to have a minimum size used as it is noted that the maximum size in some agents will be less than about 2 Mb.

With the use of multiple files, prior art proposes a solution which supports an increasing size of logging data. With this solution, the performance to write can be correct by using a new file when a previous file is full instead of using processing time in trying to reuse unoccupied space in the previous file. Nethertheless, since some quite complex file management operations (file naming convention management, closing of the previous file, opening of the new one and deleting the oldest file) are necessary before each write operation and because of the fragmenting of disk space during the life of these multiplefiles, the performance is finally degraded.

No feature is proposed for enforcing reliability of data. In order to prevent the multifile logging server application against discrepancies between files when restarting from an unexpected interruption, backup files have to be managed. This backup file management operations are also a bad effect on the performance of the application. If one file, among the multiple files has been retrieved and needs to be retrieved again after a failure, the entire file can be deleted if the space was reused for a new file. Even if the new file was created for only one record, the vital data of the entire file cannot be retreived.

In the disclosure Vol 40 No 05 dated May 1997 of the IBM Technical Disclosure Bulletin under the title 'Queueing Mechanism for Bi-Processor Communication', buffers are used by two processors as circular buffers to log exchanged primitives in a wrap around mode. This mode of logging has the advantage of using continuously the same shared space buffer without overrun or underrun. In this disclosure there is no consideration for enforcing reliability of the shared data. There is no characteristic taught in this disclosure to prevent against discrepancies in the data stored when restarting from an unexpected interruption of logging of the processors.

It is a first object of the present invention to improve the performance of the logging data server application.

It is a second object of the present invention to improve the reliability of the application.

SUMMARY OF THE INVENTION

The present invention discloses a method for writing a variable length data stream as a record of (M) storage units to a logging file, said logging file comprising (N) preallocated contiguous storage units of a direct access storage area, said logging file further comprising a head key which is set to the cumulative number of storage units written to the logging file by the previous write operations,

said method comprising the following steps:

(a) reading the head key saved in the logging file by the last write operation;

(b) providing a storage unit number key for each storage unit of said record of (M) storage units, said storage unit number key being set to the head key incremented by 1 for the first storage unit of said record of (M) storage units and being continuously incremented by 1 for each of the following storage units of said record of (M) storage units;

(c) receiving the variable length data stream as a record of (M) storage units in a write buffer;

(d) writing to each of the storage units of said record of (M) storage units in the write buffer a set of keys comprising:

the storage unit number key provided for the storage unit,
the storage unit number key of the first storage unit of said record of (M) storage units, and
the storage unit number key of the last storage unit of said record of (M) storage unis;

e) calculating a first-position which constitutes an offset in multiples of storage units in the logging file:

if head key is less than N, first-position = head key,
If head key is greater than or equal to N, first-position = remainder(head key/N);

(f) writing said record of (M) storage units in the write buffer to the logging file by performing the following steps:

writing the first storage unit of said record of (M) storage units at said first-position in said logging file,
calculating a last-position by adding the number (M) of storage units to be written to said first-position,
if last-position is less than or equal to N then perform the following step:

writing all the storage units of said record of (M) storage units to the logging file starting from said first-position offset up to the (N) storage unit and writing the following storage units of said record of (M) storage units to the logging file starting from offset 0;

(g) updating the head key by calculating new head key = head key + (M);

(h) saving said new head key ad head key in said logging file.

The method of the present invention also allows reading from a given key a record written in a logging file according to claim 1 and checking the consistency of said record, said method comprises the steps of:

reading the head key saved at the last write operation and checking that the given key is less than or equal the head key;

calculating a first-position of the record which constitutes an offset in multiples of storage units in the logging file:

if the given key is less than N, first-position = given key - 1,
If the given key is greater than or equal to N, first-position = remainder(given key/N) - 1;

reading in a read buffer the storage unit corresponding to said first-position;

checking that the just read storage unit is the correct storage unit by checking in the set of keys that the storage unit number key for the storage unit is the given key;

checking that the just read storage unit is the first storage unit of the record by checking in the set of keys that the storage unit number key for the storage unit is equal to the storage unit number key of the first storage unit.

As claimed in the dependent claims from 3 to 9, some characteristics of the method of the present invention are added to improve the robustness of the logging data in order to be able to recover from an unexpected interruption of logging leading to a discrepancy in the logged data.

The present invention also discloses a computing system implementing the steps of the method according to claim 10.

The invention improves the performance by using a single file and thus, avoiding multi file management operations. Moreover, with an initial preallocation of a contiguous area, physical accesses to the disk storage in WRITE and READ operations are optimized.

The reliability is optimized by the coherence verification; the quality of the coherence is improved because it is performed at the level of the record. The performance of coherence verification is also optimized because the information for performing this verification, based a system of keys and relative offsets, is stored inside the records themselves.

By preallocating an oversized storage area, taking into account the decreasing price of storage, the administrator will prevent the logging from risks of wrapping even if the peek speed for writing is greater than the peek speed for reading.

Consequently, for perfomance optimization in WRITE and READ operations, a protocol between the logging server and the client can be added to the method. This additional feature prevents the sending of data which cannot be collected by the server if a problem occurs and thus limits the amount of client vital data lost.

The claimed method can also be applied to any direct access media storage (flash RAM units, computer memory etc...). It is noted that the claimed method can be implemented on low cost servers because it does not require sophisticated services from the operation system and no specific feature of the direct access storage.

BRIEF DESCRIPTION OF THE DRAWINGS

Figure 1 illustrates the logging file physical model;

Figure 2 shows a normal WRITE operation to the logging file;

Figure 3 illustrates the logging file record with a normal WRITE 0 offset overlay;

Figure 4 illustrates the logging file record when there is an interrupt during the WRITE operation; the last block is missing;

Figure 5 illustrates the logging file record when there is an interrupt during the WRITE operation; the first block is incomplete;

Figure 6 illustrates the invalid record which is detected after an old record WRITE ahead overlay;

Figure 7 shows an invalid record which can be detected during the operation of sector replacement, the system performs to maintain a constant file size;

Figure 8 is a flow diagram of the complete record READ validation.

DETAILED DESCRIPTION OF THE PREFERRED EMBODIMENT

In the preferred embodiment the application considered consists in collecting and retreiving of data from a server equipped with disk storage units and receiving messages from clients in the network. Hereunder are described the file structure and the related WRITE and READ operations, the later comprising the coherence verification. The same solution can be used for data stored in any other direct access storage media.

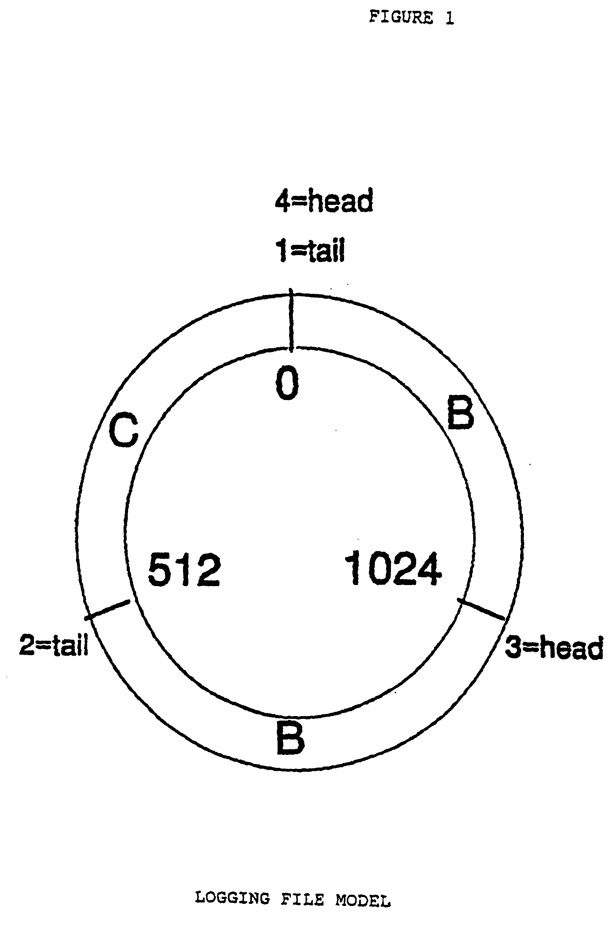

In Figure 1 is illustrated the support of data wrapping of the file model according to the preferred embodiment. The ring represents the preallocated wrapping storage area whose the relative address is 0. The contiguous storage area is allocated using a unit adapted to the most frequent data size logged, in this example blocks of 512 bytes. In Figure 1 the logging file is represented after a first logical record (A not seen) of one block has been written at offset 0 and that two following records have been written , B of two blocks and C of one block. Record C has been written in the place of the first record A, data has wrapped. Each block is addressed using a file offset and is incremented by the block size each time a new contiguous block is reached. An incremental key is provided to each block used by a record. The first key is 1 and is supposed to target the infinite. The head key of the logging file is the last block of the last written record. The tail key is the smallest block key used by the oldest record. When record A is written at offset 0, the tail key is 1 and the head key is 1; when record B is written at offset 512, the tail key is 1 and the head key is 3; when record C is written at offset 0, the tail key is 2 and the head key is 4. It is noted that the offset value is always a relative offset value. The example of figure 1 defines the first offset as offset 0.

A base key is defined as the key corresponding to offset 0.

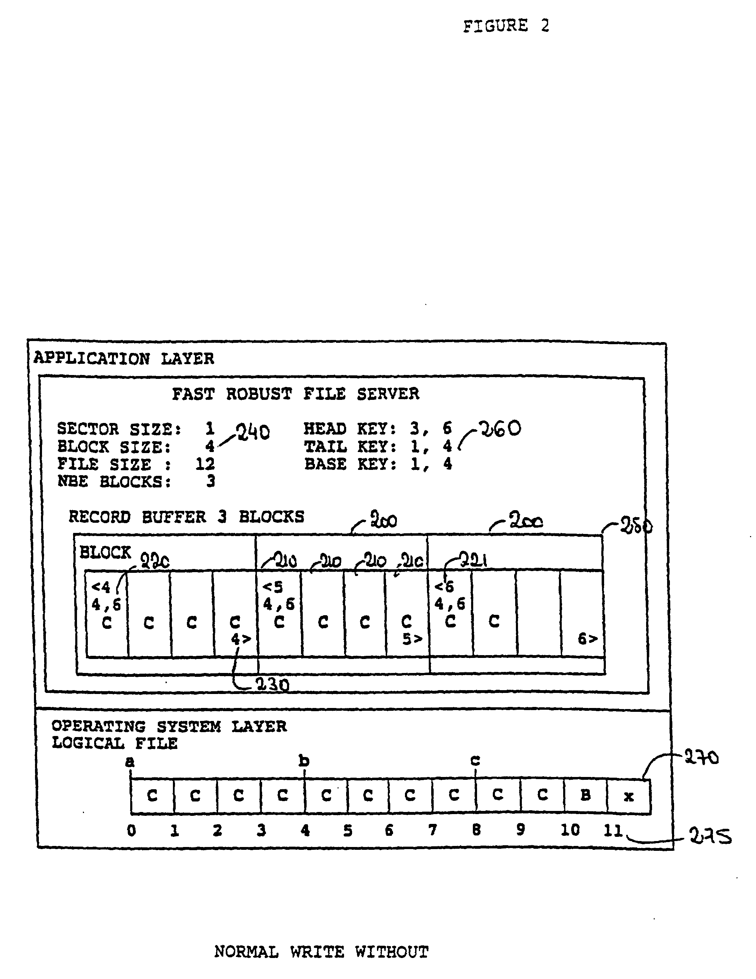

In Figure 2 the configuration parameters of the preallocated logging file have been fixed (240). This information is known by the WRITE application. For this example the unit of parameter values is 1024 bytes. The WRITE application maintains also three variables (260) containing the information to address the oldest and the last written block of the logging file. Two sets of values are represented, the first one (3,1,1) is the value of the parameters before the WRITE operation and the second set of values (6,4,4) is the value of the parameters after the WRITE operation.

Figure 2 shows the result of the WRITE operation of a logical record C in the logging file. A buffer (250) is prepared comprising 10 sectors (210), a block (200) comprising 4 sectors. As the block is the unit chosen for the logging file, the logical record will use 3 blocks in the logging file, always logically contiguous. In each block used by the logical record are written a top header (220) at the top of the block and a bottom header (230). The top header comprises the block number key (221), the top key, the top key of the first block of the logical record and the top key of the last block of the logical record. The bottom header (230) comprises the block number key of the block where the logical record is written. The top key of the first block is the head key from the set of three variables (260) incremented by one (Head key + 1). Once the WRITE buffer is ready, the head key (first variable of the set of three variables (260)) is incremented with the number of blocks of the WRITE buffer. The tail key which is the second variable is updated as follows:

$$NTK = OTK + WBnb \text{ (modulo LFnb)}$$

where NTK (4) is the new tail key, OTK (1) is the old tail key, WBnb (3) is the number of blocks in the WRITE buffer and LFnb (3), the number of blocks of the logging file.

The new base key which is the third variable of the set of three variables (260) is updated as follows:

$$NBK = OBK + LGnb * f(NHK)$$

Where OBK is the old base key, NBK is the new base key and LGnb is the number of blocks of the WRITE buffer and f is a function of the new head key (NHK):

f(new head key) = 0 if NHK is a multiple of LGnb
f(new head key) = 1 if NHK is not a multiple of LGnb

The first block of the WRITE buffer is written in the logging file at the block offset calculated as follows:

$$block\ offset = (top\ key - new\ base\ key) * block\ size$$

With the value of Figure 2 we have:

$$block\ offset = (4 - 4)\ 4 = 0$$

In Figure 2, the logical record (270) with the corresponding offsets (275) in the logging file are represented. This is the logical representation of the file seen by the Operating System.

It is noted that only the head key is mandatory to be saved at each WRITE operation to be able to read later the logging file. The use of tail key and the base key are optional. As a matter of fact, the computation of the tail key to be positioned at the beginning of the logging file can be perfomed using the head key and the number of blocks of the logging file:

$$tail\ key = head\ key - N + 1$$

The offset of one block whose the top key is known can also be computed without the use of the base key: if the top key is less than N,

$$offset = (top\ key - 1)\ blocks \qquad\qquad (expression\ 1)$$

if not,

$$offset = (remainder (top key/N) - 1) blocks.$$

It is more simple to maintain only one head key instead of the head key, the base key and the tail key. However, for the preferred embodiment where the solution applies to low cost equipment, the expression 1 computation may overflow in the computer, specially when the maximum key is large (for large logging file) such as 2**64 bits for a key of 8 bytes. In this case it is preferable to replace divisions by substract operations. In this same context, one other expression which can be used for base key computation when we have a given block key is:

$$base key = 1 + (integer part((given key - 1)/N)* N$$

If the logging application preallocates the logging file, the first block of the first logical record will not necessarily be the written at the block key 1. Optionally a first key could be defined and given as a starting key for the application. The first key can be the last key of a previous logging file for which the key sequence is consequently preserved. The administrator will always be able to evaluate the volume of data historically logged in the logging file. The way to initialize a new logging file supporting a first key (FK) not equal to 1 is to write a dummy record with a unique block and a data length ( length of data in the block, information which can be stored in the top header) equal to zero at the offset corresponding to the FK key. The head key is set to FK.

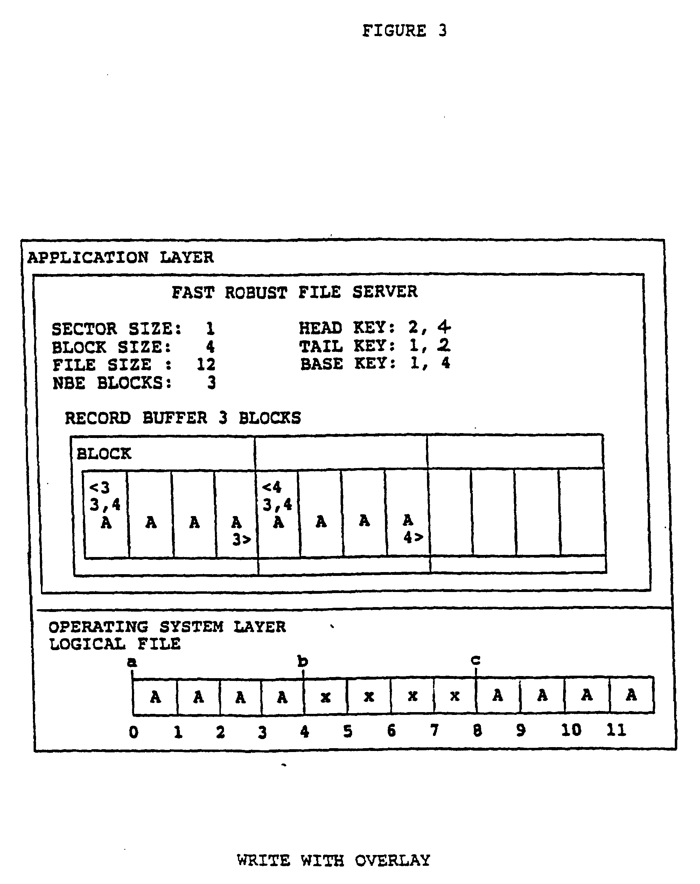

Figure 3 shows the result of a WRITE operation with a WRITE buffer preparation as with Figure 2. The difference is that the logical record is written with a physical overlay in the logging file. Suppose the head key before setting record A in the buffer is set to 2. This head key corresponds to the youngest valid record for this file and is satisfying the validity controls. This head key is used to determine the next offset to write the next record(s). But this head key is not necessarily the youngest one. The youngest record written could be detected not complete because a previous interrupt. In this case, the youngest record retained could not be the youngest one, but the youngest valid one. If the tail key is set to 1, it corresponds to the case where the file has not yet wrapped. Usually, the tail key corresponds to the oldest record that does not satisfy necessarily the validity controls. The oldest tail key is the head key minus the number of blocks plus 1 when the file has wrapped or the oldest tail key is equal to the base key and equal to 1 when the file has not yet wrapped. The tail key value can be above the oldest tails key when a read instance or the lower key value intersection of several read instances have acknowledged the reception of some records. Suppose the base key corresponding to the 0 offset is set to 1. The base key is incremented by 1 at each file wrap during the write. A case exists when we use the base key and where we need to restore a previous base key. It is when the current key used to calculate the offset is lower than the base key, this case can exist for the tail key offset calculation. The A data record received is fragmented into 2 contiguous blocks. The number of fragments 2 gives the first top key that is the head key plus 1 and gives the number 3. The last top key that is the head key plus the number of fragments that gives the last block key number 4. We set the head key to the last record key that gives the value 4. We loop on the fragment number and we fill the buffer, we set the record key to 3, in the top header we set the top key 3, the first top key 3, the last key 3, we set the length of the first data fragment that corresponds to a complete data space for this block. We copy the first data fragment, we set the bottom header with the record key 3 as the last bytes for this block. The next and last fragment is the top key 4, in the top header we set the top key 4, the first top key 4, the last top key 4, we set the length of the last data fragment, we copy the last data fragment, we set the bottom header with the top key 4 as the last bytes for this block. The previous top key can be the first top key when the data record has multiple fragments or blocks, the top key is the head key when the data record has a single block.

The first write offset is now calculated as follows:

$$number of blocks = 4 - 3 + 1 = 2$$

$$write offset = (3 - 1) * 4 = 8$$

$$next base key = 1 + 3 = 4$$

As the first offset is not offset 0 and as the top key of the second block to write (4) is greater or equal to the base key (4), then, the buffer to write overlays the 0 offset. We need for that case two write operations; a first write operation with the first write offset and the first length calculated as follows:

first length = (4 - 3) * 4 = 4

a second write operation with the second offset, 0, and the second length:

(4 - 4 + 1) * 4 = 4

The new base key is 4.

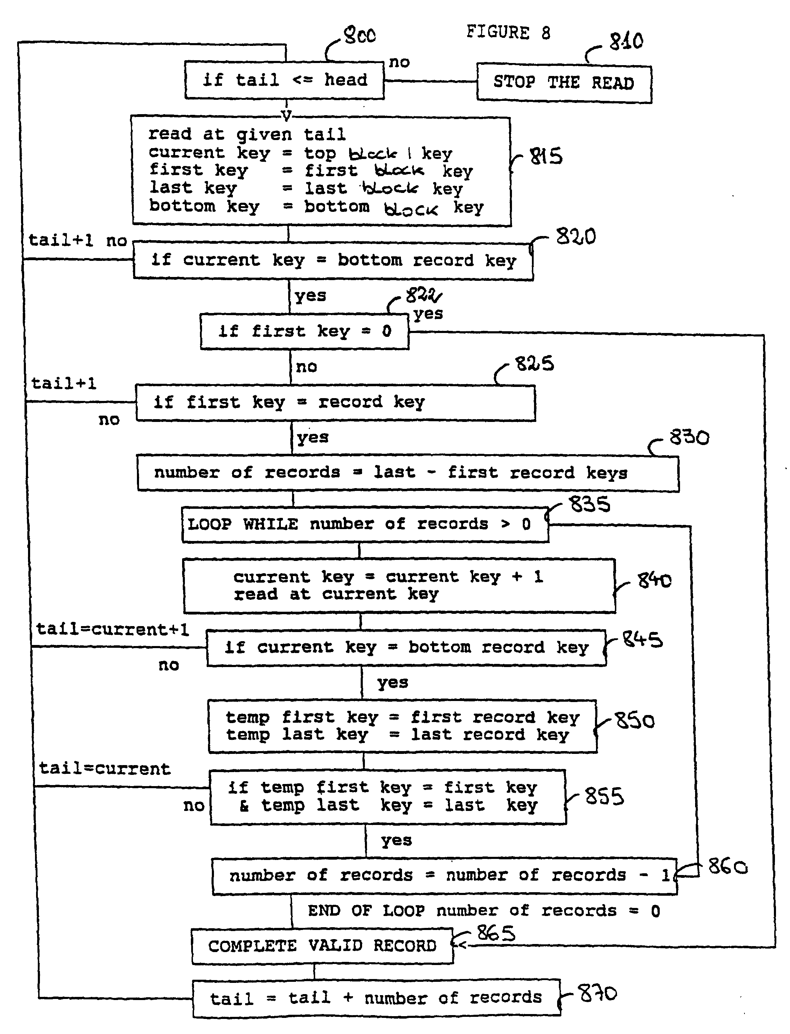

The READ operation is illustrated by the chart flow of Figure 8. This operation is executed when a client sends a request (one instance) for retrieving the logging file (LF). The set of three variables (260) is firstly read and is used to start the READ operation of the logging file. The READ operation proceeds at the block level. The READ operation, according to one object of the invention performs the Logical record coherence checking: if a block of the one logical record is not coherent the all logical record is given up.

If (800) the tail and head key values are not coherent (tail key > head key) or if no block is written (tail key = head key) , then the READ operation stops (810); if the head key is greater or eaqual not, starting from the tail (the oldest block of the file) the top header and the bottom header of the block are read (815); if there is a discrepancy between the top key and the bottom key (820), the logical record is skipped (tail + 1) and the next block is read. If not, the case where the key is 0 (test 822, yes branch) is then considered: this means that it is a single block.

It is noted that the choice to set in the first block of a logical record having only one block the first and last keys of the top header to 0 in the case where there is only one block in the logical record is optional. One other choice could be to have the two keys set at the identical values : 1,1 or 2,2 or ... n,n. This second solution is not preferred as it costs useless update of variables. The (0,0) solution saves performance.

Coming back to Figure 8, the record is complete and valid (865) and the tail is updated to the next block (870). When the first key is not equal to 0 (branch no of test 822) this means that the logical record comprises more than one contiguous block. The number of blocks in the logical record is computed (830) and until the last block is reached (835) the current key is incremented and the corresponding block is read ((840). For reading the offset is calculated still using the computation:

block offset = (top key - new base key) * block size

This block is read directely from the storage unit (disk or cache memory etc..). The intrinsic block coherence is checked (845) and if it fails (no branch of test 845) the tail key is set to the current key + 1 and the logical record is bypassed. If the intrinsic coherence is valid (yes branch of test 845), the block is intrinsically valid and the first and last keys are checked for their equalities (850, 855). If one of the key the first or the last or the two are not equal (no branch of test 855), the read is bypassed and there the tail is set to the current key but not incremented by 1 because this block just read can be valid. If the temporary first key equals the first key and the temporary last key equals the last key (yes branch of test 855), this block is part of a valid record, the number of record is decremented (860) and we can continue to read the next contiguous block (according to 835 end of loop only if the number of blocks is zero). When we reach the number of blocks read, this logical record is declared valid (865) and can be given for processing or delivery. Then the tail key can be incremented of the number of blocks just read.

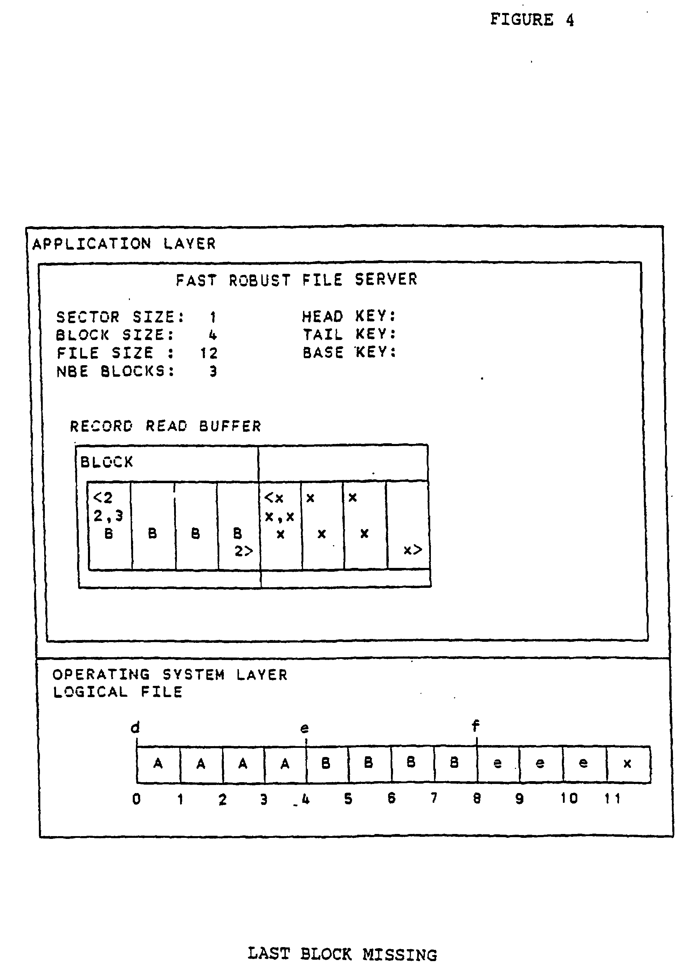

Figure 4 illustrates an invalid record due to a first case of error. This event may happen when an unexpected interruption of the logging application occurs during a WRITE operation. In the case illustrated in Figure 4 the last block is missing. The READ operation detects that the second block does not belongs to the same logical record than the previous contiguous one (855). This logical record is given up in the read operation of the logging file. This implies that the WRITE operation has been interrupted before the last block could be written. In the logical file seen by the operating system the third contiguous block has not been written (offset 8).

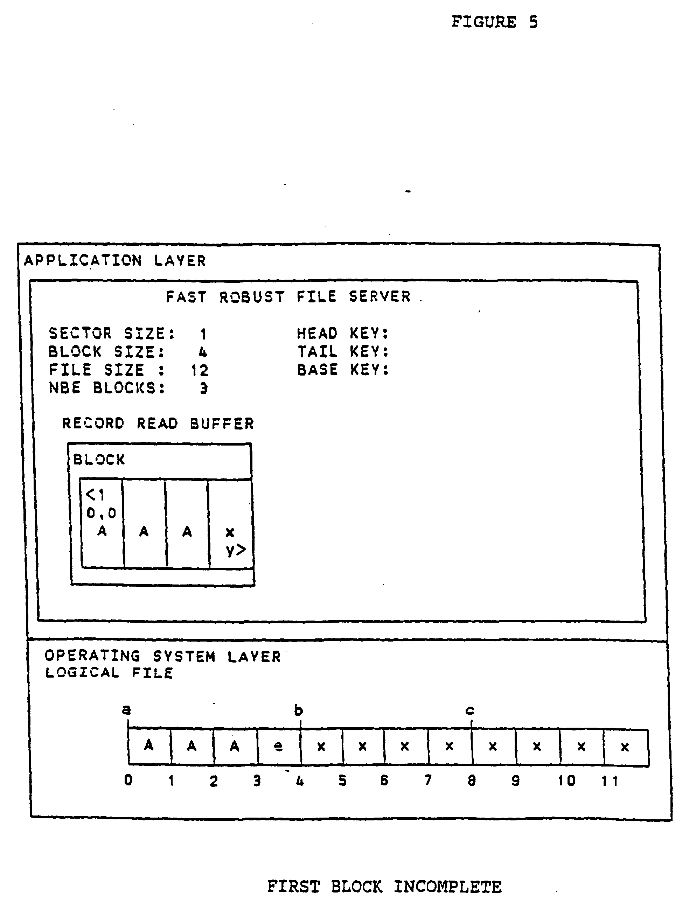

Figure 5 illustrates an invalid record due to a second case of error. This event may happen when an unexpected interruption of the logging application occurs during a WRITE operation. In the case illustrated in Figure 5 the first block is incomplete. The READ operation detects this missing block in its checking of the coherence inside the block (820). This implies that the WRITE operation has been interrupted before the last block could be written. In the logical file seen by the operating system the third contiguous block has not been written (offset 8).

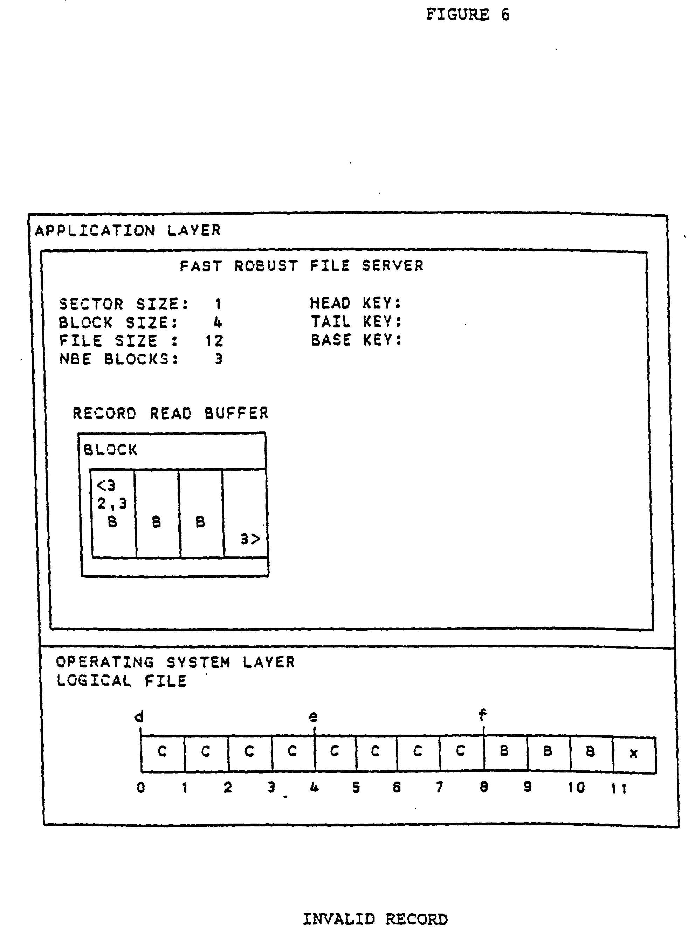

Figure 6 illustrates an invalid block B. A first block has been read in the read buffer. Internal cohence is correct (820) for this according to the top key 3 set in the top header 220 and the key 3 also read in the bottom header (230). However, the two other keys of the top header 2, 3 indicate that the top key of the first block of the logical record is 2 and not 3. This means that in the logical record of the logging file the first block is missing. This checking is performed during the READ operation (825).

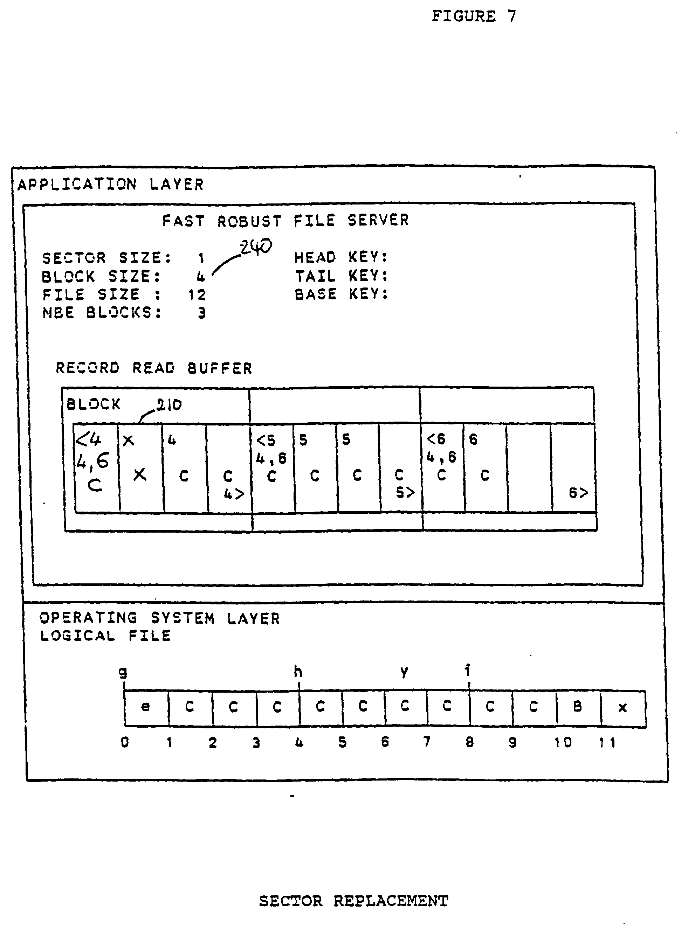

Figure 7 illustrates an optional feature of the preferred embodiment of the invention for reinforcing the coherence checking inside a block to detect in the READ operations the invalid logical records. This figure shows a READ operation of a logical record in the logging file comprising three blocks with the data C. Physically, the storage unit taken for building the logging file can be an integer number of a smaller addressable storage unit. When the smaller addressable storage unit is the smallest addressable storage unit, the operating system usually, is able to manage, transparently to the I/O API the replacement of the defectuous smallest storage unit. In the preferred embodiment (240), the unit chosen for building the logging file is a block of 4096 bytes comprising 4 sectors of 1024 bytes each, the sector being the smallest addressable unit for the operating system considered.

A sector presence key is added in each block for each sector between the first and the last sector of the block. As a matter of fact, these intermediate part of the block above two sectors are not checked for coherence by the READ operation which only checks the top and the bottom of the block. The sector presence key of one block is equal to the top key.

During the READ operation after the first level of validation is performed (flow chart of figure 7) if the logical record is coherent, an additional checking is perfomed in the READ buffer on the sequence of sectors of the blocks read. In Figure 7 the first block is invalid as in sector two (210) the expected sector presence key (4) is not found. This not coherent block invalidates the entire logical record.

**Claims**

1.    A method for writing a variable length data stream as a record of (M) storage units to a logging file, said logging file comprising (N) preallocated contiguous storage units of a direct access storage area, said logging file further comprising a head key which is set to the cumulative number of storage units written to the logging file by the previous write operations,

      said method comprising the following steps:

      (a) reading the head key saved in the logging file by the last write operation;

      (b) providing a storage unit number key for each storage unit of said record of (M) storage units, said storage unit number key being set to the head key incremented by 1 for the first storage unit of said record of (M) storage units and being continuously incremented by 1 for each of the following storage units of said record of (M) storage units;

      (c) receiving the variable length data stream as a record of (M) storage units in a write buffer;

      (d) writing to each of the storage units of said record of (M) storage units in the write buffer a set of keys comprising:

            the storage unit number key provided for the storage unit,
            the storage unit number key of the first storage unit of said record of (M) storage units, and
            the storage unit number key of the last storage unit of said record of (M) storage units;

      (e) calculating a first-position which constitutes an offset in multiples of storage units in the logging file:

            if head key is less than N, first-position = head key,
            if head key is greater than or equal to N, first-position = remainder (head key/N);

      (f) writing said record of (M) storage units in the write buffer to the logging file by performing the following steps:

            writing the first storage unit of said record of (M) storage units at said first-position in said logging file,
            calculating a last-position by adding the number (M) of storage units to be written to said first-position,
            if last-position is less than or equal to N then perform the following step:

                  writing all the storage units of said record of (M) storage units to the logging file starting from said first-position offset up to the (N) storage unit and writing the following storage units of said record of (M) storage units to the logging file starting from offset 0;

      (g) updating the head key by calculating new head key = head key + (M);

(h) saving said new head key ad head key in said logging file.

2. A method for reading from a given key a record written in a logging file according to claim 1 and checking the consistency of said record, said method comprising the steps of:

   reading the head key saved at the last write operation and checking that the given key is less than or equal the head key;

   calculating a first-position of the record which constitutes an offset in multiples of storage units in the logging file:

   if the given key is less than N, first-position = given key - 1,
   If the given key is greater than or equal to N, first-position = remainder(given key/N) - 1;

   reading in a read buffer the storage unit corresponding to said first-position;

   checking that the just read storage unit is the correct storage unit by checking in the set of keys that the storage unit number key for the storage unit is the given key;

   checking that the just read storage unit is the first storage unit of the record by checking in the set of keys that the storage unit number key for the storage unit is equal to the storage unit number key of the first storage unit.

3. The method of claim 2 further comprising the steps of:

   checking if there is more than one storage unit in the record by checking in the set of keys of the just read storage unit, that the difference between the storage unit number key of the last storage unit and the and storage unit number key of the first is greater than zero; and,

   if there is more than one storage unit in the record, said first-position becoming the current-position, repeating, until the result of the following checking step is negative, the steps of:

   - incrementing said current position by one, said current-position becoming the previous-position and the incremented current-position becoming the current-position and reading in a buffer the storage unit corresponding to said current-position,
   - checking that the storage unit just read is the following storage unit of the storage unit read for the previous position by checking that the 'storage unit number key of the last storage unit' of the set of keys of the storage unit read at the previous-position is equal to 'the storage unit number key of the first storage unit' of the set of keys of the storage unit read at the current-position.

4. The method of anyone of claims 1 to 3 wherein the writing step (d) of a set of keys consists in writing:

   - a top header of the storage unit comprising the storage unit number key provided for the storage unit, the storage unit number key of the first storage unit of said record of (M) storage units and the storage unit number key of the last storage unit of said record of (M) storage units;
   - a bottom header of the storage unit comprising the storage unit number key provided for the storage unit.

5. The method of claim 4 further comprising the step of:

   checking the coherence inside a just read storage unit by checking that the storage unit number key in the top header is equal to the storage unit number key in the bottom header.

6. The method of anyone of claims 1 to 5 wherein the writing step (d) of a set of keys further comprises the steps of:

   writing in each smallest addressable storage unit between the first and the last smallest addressable storage unit, within each of the storage units of said record of (M) storage units in the write buffer, a presence key which is the storage unit number key provided for the storage unit.

7. The method of anyone of claims 2 to 6 further comprising the steps of checking, in each smallest addressable storage unit of each storage unit located between the first and the last smallest addressable storage unit of said each of the storage units of said record of (M) storage units in the write buffer, that the presence key equals the storage unit number key provided for the storage unit.

8. The method of claims 1 to 7 further comprising an additional step for sending an acknowledgement each time a record is written in the logging file.

9. The method of anyone of claims 1 to 8 wherein the set of keys further comprises a data length parameter and wherein the the first storage unit number key of the logging file is equal to an initial number key, and, a first record of (M) storage units is written in the logging file, said record comprising only one storage unit and having in its top header a data length parameter set to zero, said record being located at the following offset in the logging file:

if the initial number key is less than N,

offset = (initial number key - 1) storage units,

if not,

offset =(remainder(initial number key/N))-1 storage units.

10. A computing system for writing a variable length data stream to a logging file, said computing system comprising means adapted to implement the steps of the method according to anyone of claims 1 to 9.

**Revendications**

1. Procédé d'écriture d'un flux de données à longueur variable sous forme d'un enregistrement de (M) unités de mémorisation sur un fichier de journalisation, ledit fichier de journalisation comprenant (N) unités de mémorisation contiguës préallouées d'une zone de mémorisation à accès direct, ledit fichier de journalisation comprenant en outre une clé de tête qui est initialisée au nombre cumulatif des unités de mémorisation écrites sur le fichier de journalisation par les opérations d'écriture précédentes,
ledit procédé comprenant les étapes suivantes :

(a) lire la clé de tête sauvegardée dans le fichier de journalisation par la dernière opération d'écriture,

(b) fournir une clé de nombre d'unités de mémorisation pour chaque unité de mémorisation dudit enregistrement de (M) unités de mémorisation, ladite clé de nombre d'unités de mémorisation étant initialisée à la clé de tête incrémentée de 1 pour la première unité de mémorisation dudit enregistrement de (M) unités de mémorisation et étant incrémentée de 1 de façon continue pour chacune des unités de mémorisation suivantes dudit enregistrement de (M) unités de mémorisation,

(c) recevoir le flux de données à longueur variable sous forme d'un enregistrement de (M) unités de mémorisation dans une mémoire tampon d'écriture,

(d) écrire dans chacune des unités de mémorisation dudit enregistrement de (M) unités de mémorisation dans la mémoire tampon d'écriture un ensemble de clés comprenant :

la clé de nombre d'unités de mémorisation fournie pour l'unité de mémorisation,

la clé de nombre d'unités de mémorisation de la première unité de mémorisation dudit enregistrement de (M) unités de mémorisation, et

la clé de nombre d'unités de mémorisation de la dernière unité de mémorisation dudit enregistrement de (M) unités de mémorisation,

(e) calculer une première position qui constitue un décalage en multiples d'unités de mémorisation dans le fichier de journalisation :

si la clé de tête est inférieure à N, première position = clé de tête,

si la clé de tête est supérieure ou égale à N, première position = reste de (clé de tête/N),

(f) écrire ledit enregistrement de (M) unités de mémorisation dans la mémoire tampon d'écriture sur le fichier de journalisation en exécutant les étapes suivantes :

écrire la première unité de mémorisation dudit enregistrement de (M) unités de mémorisation à ladite première position dans ledit fichier de journalisation,

calculer une dernière position en ajoutant le nombre (M) d'unités de mémorisation à écrire à ladite première position,

si la dernière position est inférieure ou égale à N, alors exécuter l'étape suivante :

écrire toutes les unités de mémorisation dudit enregistrement de (M) unités de mémorisation sur le fichier de journalisation en commençant à partir de ladite première position décalée jusqu'à l'unité de mémorisation (N) et écrire les unités de mémorisation suivantes dudit enregistrement de (M) unités de mémorisation sur le fichier de journalisation en commençant à partir du décalage 0,

(g) mettre à jour la clé de tête en calculant nouvelle clé de tête = clé de tête + (M),

(h) sauvegarder ladite nouvelle clé de tête en tant que clé de tête dans ledit fichier de journalisation.

2. Procédé de lecture à partir d'une clé donnée d'un enregistrement écrit dans un fichier de journalisation selon la revendication 1 et de contrôle de la cohérence dudit enregistrement, ledit procédé comprenant les étapes consistant à :

lire la clé de tête sauvegardée à la dernière opération d'écriture et contrôler que la clé donnée est inférieure ou égale à la clé de tête,

calculer une première position de l'enregistrement qui constitue un décalage en multiples d'unités de mémorisation dans le fichier de journalisation :

si la clé donnée est inférieure à N, première position = clé donnée - 1,

si la clé donnée est supérieure ou égale à N, première position = reste de (clé donnée/N) - 1,

lire dans une mémoire tampon de lecture l'unité de mémorisation correspondant à ladite première position,

contrôler que l'unité de mémorisation qui vient d'être lue est l'unité de mémorisation correcte en contrôlant dans l'ensemble de clés que la clé de nombre d'unités de mémorisation pour l'unité de mémorisation est la clé donnée,

contrôler que l'unité de mémorisation qui vient d'être lue est la première unité de mémorisation de l'enregistrement en contrôlant dans l'ensemble de clés que la clé de nombre d'unités de mémorisation pour l'unité de mémorisation est égale à la clé de nombre d'unités de mémorisation de la première unité de mémorisation.

3. Procédé selon la revendication 2, comprenant en outre les étapes consistant à :

contrôler s'il existe plus d'une unité de mémorisation dans l'enregistrement en contrôlant dans l'ensemble de clés de l'unité de mémorisation qui vient d'être lue que la différence entre la clé de nombre d'unités de mémorisation de la dernière unité de mémorisation et la clé de nombre d'unités de mémorisation de la première est supérieure à zéro, et

s'il existe plus d'une unité de mémorisation dans l'enregistrement, ladite première position devenant la position en cours, répéter, jusqu'à ce que le résultat de l'étape de contrôle suivante soit négatif, les étapes consistant à :

- incrémenter ladite position en cours de un, ladite position en cours devenant la position précédente et la position en cours incrémentée devenant la position en cours et lire dans une mémoire tampon l'unité de mémorisation correspondant à ladite position en cours,

- contrôler que l'unité de mémorisation qui vient d'être lue est l'unité de mémorisation suivante de l'unité de mémorisation lue pour la position précédente en contrôlant que la clé de nombre d'unités de mémorisation de la dernière unité de mémorisation de l'ensemble de clés de l'unité de mémorisation lue à la position précédente est égale à la clé de nombre d'unités de mémorisation de la première unité de mémorisation de l'ensemble de clés de l'unité de mémorisation lue à la position en cours.

4. Procédé selon l'une quelconque des revendications 1 à 3, dans lequel l'étape d'écriture (d) d'un ensemble de clés consiste à écrire :

- un en-tête supérieur de l'unité de mémorisation comprenant la clé de nombre d'unités de mémorisation fournie pour l'unité de mémorisation, la clé de nombre d'unités de mémorisation de la première unité de mémorisation dudit enregistrement de (M) unités de mémorisation et la clé de nombre d'unités de mémorisation de la dernière unité de mémorisation dudit enregistrement de (M) unités de mémorisation,

- un en-tête inférieur de l'unité de mémorisation comprenant la clé de nombre d'unités de mémorisation fournie pour l'unité de mémorisation.

5. Procédé selon la revendication 4, comprenant en outre l'étape consistant à :

contrôler la cohérence à l'intérieur d'une unité de mémorisation qui vient d'être lue en contrôlant que la clé de nombre d'unités de mémorisation dans l'en-tête supérieur est égale à la clé de nombre d'unités de mémorisation dans l'en-tête inférieur.

6. Procédé selon l'une quelconque des revendications 1 à 5, dans lequel l'étape d'écriture (d) d'un ensemble de clés comprend en outre les étapes consistant à :

écrire dans chaque unité de mémorisation adressable la plus petite entre la première et la dernière unités de mémorisation adressables les plus petites, à l'intérieur de chacune des unités de mémorisation dudit enregistrement de (M) unités de mémorisation dans la mémoire tampon d'écriture, une clé de présence qui représente la clé de nombre d'unités de mémorisation fournie pour l'unité de mémorisation.

7. Procédé selon l'une quelconque des revendications 2 à 6, comprenant en outre les étapes consistant à contrôler, dans chaque unité de mémorisation adressable la plus petite de chaque unité de mémorisation localisée entre la première et la dernière unités de mémorisation adressables les plus petites de ladite chacune des unités de mémorisation dudit enregistrement de (M) unités de mémorisation dans la mémoire tampon d'écriture, que la clé de présence est égale à la clé de nombre d'unités de mémorisation fournie pour l'unité de mémorisation.

8. Procédé selon la revendication 1 à 7, comprenant en outre une étape supplémentaire destinée à émettre un accusé de réception à chaque fois qu'un enregistrement est écrit dans le fichier de journalisation.

9. Procédé selon l'une quelconque des revendications 1 à 8, dans lequel l'ensemble de clés comprend en outre un paramètre de longueur de données et dans lequel la première clé de nombre d'unités de mémorisation du fichier de journalisation est égale à une clé de nombre initial, et un premier enregistrement de (M) unités de mémorisation est écrit dans le fichier de journalisation, ledit enregistrement comprenant seulement une unité de mémorisation et comportant dans son en-tête supérieur un paramètre de longueur de données initialisé à zéro, ledit enregistrement étant localisé au décalage suivant dans le fichier de journalisation :

si la clé de nombre initial est inférieure à N,

décalage = (clé de nombre initial - 1) unités de mémorisation,

si ce n'est pas le cas,

décalage = (reste de (clé de nombre initial/N)) - 1 unités de mémorisation.

10. Système informatique destiné à écrire un flux de données à longueur variable dans un fichier de journalisation, ledit système informatique comprenant un moyen conçu pour mettre en oeuvre les étapes du procédé selon l'une quelconque des revendications 1 à 9.

**Patentansprüche**

1. Verfahren zum Schreiben eines Datenstroms variabler Länge als Satz von (M) Speichereinheiten in eine Protokolldatei, wobei die Protokolldatei (N) vorab zugeordnete zusammenhängende Speichereinheiten eines Speicherbereichs mit Direktzugriff umfasst, und die Protokolldatei ferner einen Kopfschlüssel umfasst, der gleich der kumulierten Anzahl der durch die vorangehenden Schreiboperationen in die Protokolldatei geschriebenen Speichereinheiten gesetzt wird,
wobei das Verfahren die folgenden Schritte umfasst:

   (a) Lesen des durch die letzte Schreiboperation in der Protokolldatei gespeicherten Kopfschlüssels;

   (b) Bereitstellen eines Schlüssels der Speichereinheitennummer für jede Speichereinheit des Satzes von (M) Speichereinheiten, wobei der Schlüssel der Speichereinheitennummer gleich dem für die erste Speichereinheit des Satzes von (M) Speichereinheiten um 1 erhöhten Kopfschlüssel gesetzt und fortlaufend für jede der folgenden Speichereinheiten des Satzes von (M) Speichereinheiten um 1 erhöht wird;

   (c) Empfangen des Datenstroms variabler Länge als Satz von (M) Speichereinheiten in einem Schreibpuffer;

   (d) Schreiben einer Gruppe von Schlüsseln in jede der Speichereinheiten des im Schreibpuffer befindlichen Satzes von (M) Speichereinheiten, wobei die Schlüssel Folgendes umfassen:

      den für die Speichereinheit bereitgestellten Schlüssel der Speichereinheitennummer,
      den Schlüssel der Speichereinheitennummer der ersten Speichereinheit des Satzes von (M) Speichereinheiten und
      den Schlüssel der Speichereinheitennummer der letzten Speichereinheit des Satzes von (M) Speichereinheiten;

   (e) Berechnen einer Anfangsposition, die eine in Vielfachen von Speichereinheiten in der Protokolldatei ausgedrückte relative Adresse ist: Anfangsposition = Kopfschlüssel, wenn der Kopfschlüssel kleiner als N ist, Anfangsposition = Rest(Kopfschlüssel/N), wenn der Kopfschlüssel größer als oder gleich N ist;

   (f) Schreiben des Satzes von (M) Speichereinheiten in den Schreibpuffer der Protokolldatei durch Ausführen der folgenden Schritte:

      Schreiben der ersten Speichereinheit des Satzes von (M) Speichereinheiten in die Anfangsposition in der Protokolldatei,
      Berechnen einer Endposition durch Addieren der Anzahl (M) zu schreibender Speichereinheiten zur Anfangsposition,
      Ausführen des folgenden Schritts, wenn die Endposition kleiner als oder gleich N ist:

         Schreiben aller Speichereinheiten des Satzes von (M) Speichereinheiten in die Protokolldatei, beginnend mit der relativen Adresse der Anfangsposition bis zur Speichereinheit (N), und Schreiben der folgenden Speichereinheiten des Satzes von (M) Speichereinheiten in die Protokolldatei, beginnend mit der relativen Adresse 0;

   (g) Aktualisieren des Kopfschlüssels durch die folgende Berechnung: neuer Kopfschlüssel = Kopfschlüssel + (M);

   (h) Speichern des neuen Kopfschlüssels als Kopfschlüssel in der Protokolldatei.

2. Verfahren zum Lesen eines in eine Protokolldatei geschriebenen Datensatzes anhand eines vorgegebenen Schlüssels gemäß Anspruch 1 und zur Konsistenzprüfung des Datensatzes, wobei das Verfahren die folgenden Schritte umfasst:

Lesen des während der letzten Schreiboperation gespeicherten Kopfschlüssels und Prüfen, ob der vorgegebene Schlüssel kleiner als oder gleich dem Kopfschlüssel ist;

Berechnen einer Anfangsposition des Datensatzes, die eine relative in Vielfachen von Speichereinheiten in der Protokolldatei ausgedrückte Adresse darstellt:

Anfangsposition = vorgegebener Schlüssel - 1, wenn der vorgegebene Schlüssel kleiner als N ist, Anfangsposition = Rest(vorgegebener Schlüssel/N) - 1, wenn der vorgegebene Schlüssel größer als oder gleich N ist;

Lesen der der Anfangsposition entsprechenden Speichereinheit in einem Lesepuffer;

Prüfen, ob die soeben gelesene Speichereinheit die richtige Speichereinheit ist, durch Prüfen in der Gruppe von Schlüsseln, ob der Schlüssel der Speichereinheitennummer für die Speichereinheit gleich dem vorgegebenen Schlüssel ist;

Prüfen, ob die soeben gelesene Speichereinheit die erste Speichereinheit des Datensatzes ist, durch Prüfen in der Gruppe von Schlüsseln, ob der Schlüssel der Speichereinheitennummer für die Speichereinheit gleich dem Schlüssel der Speichereinheitennummer der ersten Speichereinheit ist.

3. Verfahren nach Anspruch 2, das ferner die folgenden Schritte umfasst:

Prüfen, ob es in dem Datensatz mehr als eine Speichereinheit gibt, durch Prüfen in der Gruppe von Schlüsseln der soeben gelesenen Speichereinheit, ob die Differenz zwischen dem Schlüssel der Speichereinheitennummer der letzten Speichereinheit und dem Schlüssel der Speichereinheitennummer der ersten Speichereinheit größer als null ist; und

Wiederholen der folgenden Schritte, wenn es in dem Datensatz mehr als eine Speichereinheit gibt und die Anfangsposition zur aktuellen Position wird, bis das Ergebnis des nachfolgenden Prüfschritts negativ ist:

- Erhöhen der aktuellen Position um eins, wodurch die aktuelle Position zur vorigen Position und die erhöhte aktuelle Position zur aktuellen Position wird, und Lesen der der aktuellen Position entsprechenden Speichereinheit in einem Puffer,
- Prüfen, ob die soeben gelesene Speichereinheit gleich der Speichereinheit ist, die auf die für die vorangehende Position gelesene Speichereinheit folgt, durch Prüfen, ob der "Schlüssel der Speichereinheitennummer der letzten Speichereinheit" der Gruppe von Schlüsseln der an der vorigen Position gelesenen Speichereinheit gleich dem "Schlüssel der Speichereinheitennummer der ersten Speichereinheit" der Gruppe von Schlüsseln der an der aktuellen Position gelesenen Speichereinheit ist.

4. Verfahren nach einem der Ansprüche 1 bis 3, bei dem der Schreibschritt (d) einer Gruppe von Schlüsseln aus den folgenden Schritten besteht:

- Schreiben eines oberen Headers der Speichereinheit, der den für die Speichereinheit bereitgestellten Schlüssel der Speichereinheitennummer, den Schlüssel der Speichereinheitennummer der ersten Speichereinheit des Satzes von (M) Speichereinheiten und den Schlüssel der Speichereinheitennummer der letzten Speichereinheit des Satzes von (M) Speichereinheiten umfasst;
- Schreiben eines unteren Headers der Speichereinheit, der den für die Speichereinheit bereitgestellten Schlüssel der Speichereinheitennummer umfasst.

5. Verfahren nach Anspruch 4, das ferner den folgenden Schritt umfasst:

Prüfen der Kohärenz innerhalb der soeben gelesenen Speichereinheit durch Prüfen, ob der Schlüssel der Speichereinheitennummer im oberen Header gleich dem Schlüssel der Speichereinheitennummer im unteren Header ist.

6. Verfahren nach einem der Ansprüche 1 bis 5, bei dem der Schreibschritt (d) einer Gruppe von Schlüsseln ferner die folgenden Schritte umfasst:

Schreiben eines Anzeigeschlüssels, der gleich dem für die Speichereinheit bereitgestellten Schlüssel der Speichereinheitennummer ist, in jede kleinste adressierbare Speichereinheit zwischen der ersten und der letzten kleinsten adressierbaren Speichereinheit innerhalb jeder Speichereinheit des Satzes von (M) Speichereinheiten im Schreibpuffer.

7. Verfahren nach einem der Ansprüche 2 bis 6, das ferner die Schritte des Prüfens in jeder kleinsten adressierbaren Speichereinheit jeder zwischen der ersten und der letzten kleinsten adressierbaren Speichereinheit jeder der Speichereinheiten des Satzes von (M) befindlichen Speichereinheiten im Schreibpuffer umfasst, ob der Anzeigeschlüssel gleich dem für die Speichereinheit bereitgestellten Schlüssel der Speichereinheitennummer ist.

8. Verfahren nach den Ansprüchen 1 bis 7, das ferner einen zusätzlichen Schritt umfasst, in dem immer dann eine Bestätigung gesendet wird, wenn ein Datensatz in die Protokolldatei geschrieben wurde.

9. Verfahren nach einem der Ansprüche 1 bis 8, bei dem die Gruppe von Schlüsseln ferner einen Datenlängenparameter umfasst, und bei dem der erste Schlüssel der Speichereinheitennummer der Protokolldatei gleich dem Schlüssel einer Anfangsnummer ist, und ein erster Satz von (M) Speichereinheiten in die Protokolldatei geschrieben wird, wobei dieser Satz nur eine Speichereinheit umfasst und in seinem oberen Header einen auf null gesetzten Datenlängenparameter aufweist, wobei der Satz in der Protokolldatei an der folgenden relativen Adresse steht:

relative Adresse = (Schlüssel der Anfangsnummer - 1) Speichereinheiten, wenn der Schlüssel der Anfangsnummer kleiner als N ist,
relative Adresse = (Rest(Schlüssel der Anfangsnummer/N))-1 Speichereinheiten, wenn der Schlüssel der Anfangsnummer nicht kleiner als N ist.

10. Rechnersystem zum Schreiben eines Datenstroms variabler Länge in eine Protokolldatei, wobei das Rechnersystem für die Implementierung der Schritte des Verfahrens gemäß einem der Schritte 1 bis 9 angepasste Mittel umfasst.

FIGURE 1

LOGGING FILE MODEL

FIGURE 2

```
APPLICATION LAYER

              FAST ROBUST FILE SERVER

  SECTOR SIZE:   1  /240   HEAD KEY: 3, 6  /260
  BLOCK SIZE:    4         TAIL KEY: 1, 4
  FILE SIZE :   12         BASE KEY: 1, 4
  NBE BLOCKS:    3

  RECORD BUFFER 3 BLOCKS        /200        /200        /250

  BLOCK /220c          /210 /210 /210 /210    /221
  <4                   <5                      <6
  4,6                  4,6                     4,6
   C    C    C    C     C    C    C    C        C    C              6>
                  4>                  5>
                       /230

OPERATING SYSTEM LAYER
LOGICAL FILE
      a                    b              c                        /270
      C   C   C   C   C   C   C   C   C   C   B   x
      0   1   2   3   4   5   6   7   8   9   10  11               /275
```

NORMAL WRITE WITHOUT

FIGURE 3

APPLICATION LAYER

FAST ROBUST FILE SERVER

SECTOR SIZE:  1        HEAD KEY: 2, 4
BLOCK SIZE:   4        TAIL KEY: 1, 2
FILE SIZE :   12       BASE KEY: 1, 4
NBE BLOCKS:   3

RECORD BUFFER 3 BLOCKS

OPERATING SYSTEM LAYER
LOGICAL FILE

WRITE WITH OVERLAY

FIGURE 4

APPLICATION LAYER

FAST ROBUST FILE SERVER

SECTOR SIZE:  1      HEAD KEY:
BLOCK SIZE:   4      TAIL KEY:
FILE SIZE :   12     BASE KEY:
NBE BLOCKS:   3

RECORD READ BUFFER

| BLOCK | | | | | | | |
|---|---|---|---|---|---|---|---|
| <2<br>2,3<br>B | B | B | B<br>2> | <x<br>x,x<br>x | x<br><br>x | x<br><br>x | <br><br>x> |

OPERATING SYSTEM LAYER
LOGICAL FILE

| | d | | | e | | | | f | | | |
|---|---|---|---|---|---|---|---|---|---|---|---|
| A | A | A | A | B | B | B | B | e | e | e | x |
| 0 | 1 | 2 | 3 | 4 | 5 | 6 | 7 | 8 | 9 | 10 | 11 |

LAST BLOCK MISSING

FIGURE 5

```
APPLICATION LAYER

            FAST ROBUST FILE SERVER .

   SECTOR SIZE:   1      HEAD KEY:
   BLOCK SIZE:    4      TAIL KEY:
   FILE SIZE :    12     BASE KEY:
   NBE BLOCKS:    3

     RECORD READ BUFFER

      BLOCK
        <1
        0,0
        A     A     A     x
                          y>


  OPERATING SYSTEM LAYER
  LOGICAL FILE

      a              b              c
    | A | A | A | e | x | x | x | x | x | x | x | x |
      0   1   2   3   4   5   6   7   8   9  10  11
```

FIRST BLOCK INCOMPLETE

FIGURE 6

APPLICATION LAYER

FAST ROBUST FILE SERVER

SECTOR SIZE:   1        HEAD KEY:
BLOCK SIZE:    4        TAIL KEY:
FILE SIZE :    12       BASE KEY:
NBE BLOCKS:    3

RECORD READ BUFFER

BLOCK

| <3 2,3 B | B | B | 3> |

OPERATING SYSTEM LAYER
LOGICAL FILE

d                    e                    f

| C | C | C | C | C | C | C | C | B | B | B | x |

0   1   2   3   4   5   6   7   8   9   10  11

INVALID RECORD

FIGURE 7

SECTOR REPLACEMENT

FIGURE 8

**800**

if tail <= head — no → STOP THE READ **810**

↓ yes

**815**
read at given tail
current key = top block | key
first key   = first block key
last key    = last block key
bottom key  = bottom block key

tail+1 no ← **820** if current key = bottom record key

↓ yes

**822** if first key = 0 — yes →

↓ no

tail+1 ← **825** if first key = record key

no

↓ yes

**830** number of records = last - first record keys

**835** LOOP WHILE number of records > 0

**840** current key = current key + 1
read at current key

tail=current+1 ← **845** if current key = bottom record key

no

↓ yes

**850** temp first key = first record key
temp last key  = last record key

tail=current ← **855** if temp first key = first key
& temp last key = last key

no

↓ yes

**860** number of records = number of records - 1

END OF LOOP number of records = 0

**865** COMPLETE VALID RECORD ←

**870** tail = tail + number of records

23